# EUROPÄISCHE PATENTSCHRIFT

(11) **EP 3 572 275 B1**
(45) Veröffentlichungstag und Bekanntmachung des Hinweises auf die Patenterteilung: **26.08.2020**
(21) Anmeldenummer: 19174170.1
(22) Anmeldetag: 13.05.2019
(51) Int. Cl.: B60N 2/39, B60N 2/50, B60N 2/52, B60N 2/54, B60N 2/02

(54) **FAHRZEUGSITZ**
VEHICLE SEAT
SIÈGE DE VÉHICULE

(30) Priorität: 18.05.2018 DE 102018112036
(43) Veröffentlichungstag der Anmeldung: 27.11.2019
(73) Patentinhaber: Grammer AG, 92224 Amberg (DE)
(72) Erfinder: Haller, Erwin, 92262 Birgland (DE); Irrgang, Andreas, 92421 Schwandorf (DE); Krivenkov, Konstantin, 92224 Amberg (DE)
(74) Vertreter: Hannke, Christian

(56) Entgegenhaltungen:
- EP-A1- 2 423 039
- US-A- 2 489 981
- US-A- 5 409 295

## Beschreibung

Die Erfindung betrifft einen Fahrzeugsitz mit einer Federeinrichtung zum Federn von Schwenkbewegungen und mit einer ersten Dämpfungseinrichtung zum Dämpfen der Schwenkbewegungen eines Oberteils des Fahrzeugsitzes gegenüber einem Unterteil des Fahrzeugsitzes um eine in einer Fahrzeugsitzlängsrichtung oder Fahrzeugsitzbreitenrichtung verlaufend angeordneten Schwenkachse und mit einer zweiten Dämpfungseinrichtung zum Dämpfen einer Translationsbewegung des Fahrzeugsitzes.

Derartige Fahrzeugsitze zum Federn und Dämpfen sind aus dem Stand der Technik bekannt, beispielsweise aus WO 2014/176130 A1. Hierbei ist ein Fahrzeugsitz erkennbar, welcher um eine Schwenkachse verschwenkbar ist und mittels Feder- bzw. Dämpfungseinrichtungen gegenüber der Karosserie gefedert bzw. gedämpft gelagert ist. Die Anordnung der Federung bzw. Dämpfung ist allerdings sehr platzintensiv ; angeordnet. Aus der EP-A-2 423 039 ist ebenfalls ein Fahrzeugsitz mit einer Federeinrichtung bekannt.

Es ist demzufolge Aufgabe der vorliegenden Erfindung, die Nachteile des Standes der Technik zu überkommen und einen Fahrzeugsitz zu präsentieren, welcher eine platzsparende sowie konstruktiv und funktional verbesserte Feder- und Dämpfungseinrichtung gegenüber dem Stand der Technik aufweist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, einen Fahrzeugsitz mit einer Federeinrichtung zum Federn von Schwenkbewegungen und mit einer ersten Dämpfungseinrichtung zum Dämpfen der Schwenkbewegungen eines Oberteils des Fahrzeugsitzes gegenüber einem Unterteil des Fahrzeugsitzes um eine in einer Fahrzeugsitzlängsrichtung oder Fahrzeugsitzbreitenrichtung verlaufend angeordnete Schwenkachse und mit einer zweiten Dämpfungseinrichtung zum Dämpfen einer Translationsbewegung des Fahrzeugsitzes, wobei die Federeinrichtung einen ersten in transversaler Richtung elastisch verformbaren und in einer Fahrzeugsitzlängsrichtung oder Fahrzeugsitzbreitenrichtung verlaufenden Federstab und ein um die Schwenkachse verschwenkbares Verbindungsteil aufweist, welches den ersten Federstab und die Schwenkachse verbindet, um bei einer Verschwenkung des Oberteils den ersten Federstab zu verformen, wobei die erste Dämpfungseinrichtung einen ersten Dämpfer mit einem ersten Ende und einem zweiten Ende umfasst, wobei das erste Ende schwenkbar mittels einer ersten Schwenkachse mit dem Unterteil verbunden ist und das zweite Ende schwenkbar mittels einer fünften Schwenkachse mit einem ersten Hebelelement verbunden ist, wobei das erste Hebelelement schwenkbar mittels einer zweiten Schwenkachse mit dem Unterteil verbunden ist und ein zweites Hebelelement vorgesehen ist, welches schwenkbar mittels einer dritten Schwenkachse mit dem ersten Hebelelement und schwenkbar mittels einer vierten Schwenkachse mit dem Oberteil verbunden ist, und wobei die zweite Dämpfungseinrichtung einen zweiten Dämpfer aufweist, welcher senkrecht zu dem ersten Federstab in Fahrzeugsitzbreitenrichtung oder Fahrzeugsitzlängsrichtung angeordnet ist.

Besonders bevorzugt ist es hierbei, wenn der erste Federstab in der Fahrzeugsitzlängsrichtung verlaufend angeordnet ist, dass der zweite Dämpfer in Fahrzeugsitzbreitenrichtung verlaufend angeordnet ist. Entsprechend gilt, falls der erste Federstab in Fahrzeugsitzbreitenrichtung verlaufend angeordnet ist, dass der zweite Dämpfer in Fahrzeugsitzlängsrichtung verlaufend angeordnet ist. Besonders bevorzugt verlaufen der erste Federstab in Fahrzeugsitzlängsrichtung oder Fahrzeugsitzbreitenrichtung und der zweite Dämpfer in Fahrzeugsitzbreitenrichtung oder Fahrzeugsitzlängsrichtung.

Unter einem Federstab ist hierbei ein Stab zu verstehen, welcher federnde Eigenschaften aufweist und insbesondere in seiner transversalen Richtung elastisch verformbar ist. Durch eine Belastung des Stabes, hervorgerufen durch die elastische Verformung, wird der Federstab zeitlich begrenzt verformt, wodurch Rückführkräfte erzeugt werden, welche den Federstab bei einer Entlastung seinen Ausgangszustand zurückversetzen.

Erfindungsgemäß ist das Verbindungsteil derart ausgebildet und vorgesehen, den ersten Federstab und die Schwenkachse miteinander zu verbinden. Besonders bevorzugt steht hierbei das Verbindungsteil mit dem Oberteil in Wirkverbindung, das heißt, dass bei einer Schwenkbewegung des Oberteils gegenüber dem Unterteil das Verbindungsteil ebenso um die Schwenkachse verschwenkt wird. Dadurch, dass das Verbindungsteil die Schwenkachse und den ersten Federstab miteinander verbindet, wird bei einer Verschwenkung des Oberteils und einer damit einhergehenden Verschwenkung des Verbindungsteils um die Schwenkachse der erste Federstab deformiert und entsprechend eine Federung des Oberteils hervorgerufen.

Ebenso besonders bevorzugt ist die Schwenkachse in Fahrzeugsitzlängsrichtung verlaufend angeordnet.

Gemäß einer besonders bevorzugten Ausführungsform ist die zweite Dämpfungseinrichtung in einer Fahrzeugsitzhöhenrichtung gesehen unterhalb der ersten Dämpfungseinrichtung und unterhalb der Federeinrichtung angeordnet.

Besonders bevorzugt ist die zweite Dämpfungseinrichtung in Fahrzeugsitzhöhenrichtung gesehen zwischen dem Unterteil und einer Karosserie eines Fahrzeugs angeordnet.

Wenn die zweite Dämpfungseinrichtung oberhalb der Federeinrichtung angeordnet wäre, könnte es passieren, dass sich der Schwerpunkt zu weit nach außen verlagert und hierdurch die Federeinrichtung und die erste Dämpfungseinrichtung, insbesondere deren jeweiligen Elemente, zu stark belastet werden würden.

Gemäß einer weiteren bevorzugten Ausführungsform weist die zweite Dämpfungseinrichtung einen dritten Dämpfer auf, welcher parallel zu dem zweiten Dämpfer angeordnet ist und der zweite Dämpfer und der dritte Dämpfer in einer ersten gemeinsamen Ebene angeordnet sind, welche parallel ist zu der Ebene gebildet aus der Fahrzeugsitzlängsrichtung und der Fahrzeugsitzbreitenrichtung.

Durch eine derartige Ausgestaltung ist es möglich, die wirkende Kraft der zweiten Dämpfungseinrichtung zu verändern. Insbesondere ist es denkbar, den zweiten Dämpfer und den dritten Dämpfer derart anzuordnen, dass eine möglichst symmetrische Krafteinleitung erfolgen kann.

Weiter bevorzugt sind der erste Federstab, die Verbindungseinheit und die Schwenkachse in einer Fahrzeugsitzhöhenrichtung gesehen zwischen dem Oberteil und dem Unterteil angeordnet. Hierdurch kann eine weitere Platzreduzierung vorgenommen werden.

Gemäß einer bevorzugten Ausführungsform ist die Schwenkachse vorzugsweise als eine Lagerachse ausgebildet und die Schwenkachse weist ein erstes Ende und ein zweites Ende auf, wobei das erste Ende und das zweite Ende der Schwenkachse mit dem Federungsunterteil verbunden sind.

Es ist ebenso denkbar, dass die Schwenkachse als eine Lagerwelle ausgebildet ist, das heißt, insbesondere eben drehbar gelagert ist.

Weiter vorzugsweise sind ein erster Lagerbock und ein zweiter Lagerbock vorgesehen, welche jeweils mit dem Unterteil starr verbunden sind und der erste Lagerbock das erste Ende der Schwenkachse und der zweite Lagerbock das zweite Ende der Schwenkachse lagert.

Gemäß einer weiteren bevorzugten Ausführungsform weist der erste Federstab ein erstes Ende und ein zweites Ende auf, wobei das erste Ende des ersten Federstabs und das zweite Ende des Federstabs mit dem Federungsunterteil verbunden sind, insbesondere starr verbunden sind. Dadurch kann eine wesentlich höhere Steifigkeit erreicht werden. Durch eine starre Verbindung kann ebenso ausgeschlossen werden, dass bei einer Verformung des ersten Federstabs unerwünschte Drehbewegungen des ersten Federstabs auftreten und zu unerwünschten Effekten hinsichtlich der Federeigenschaften führen.

Weiter bevorzugt ist das erste Ende des ersten Federstabs mit dem ersten Lagerbock und das zweite Ende des ersten Federstabs mit dem zweiten Lagerbock verbunden.

Gemäß einer weiteren bevorzugten Ausführungsform ist das Verbindungsteil mit der Schwenkachse derart verbunden, dass bei einer Drehung der Schwenkachse das Verbindungsteil entlang der Schwenkachse verschiebbar ist.

Denkbar ist hierbei beispielsweise, dass die Schwenkachse bzw. die Lagerwelle als eine Drehspindel ausgebildet ist und das Verbindungsteil entsprechend zugehörig komplementär ausgebildet ist. Durch Drehung der Drehspindel wird das Verbindungsteil entlang der Drehspindel verlagert, insbesondere translatorisch verlagert.

Alternativ kann das Verbindungsteil durch Beaufschlagung eines Zugs oder Drucks in Richtung der Schwenkachse verschoben werden, beispielsweise durch Verwendung von entsprechenden pneumatischen Zylindern, Bowdenzügen, oder dergleichen.

Alternativ kann daher das Verbindungsteil auch als eine Laufkatze bezeichnet werden.

Durch die Verschiebung des Verbindungsteils bzw. der Laufkatze wird auf einer Seite der Abstand des Verbindungsteils zu einem Ende der Schwenkachse bzw. zu einem Lagerbock kleiner, wodurch hierdurch die Federungseigenschaften des ersten Federstabs sich verändern. Insgesamt kann also durch Anpassung der Position des Verbindungsteils auf der Schwenkachse die Federungseigenschaften der Federeinrichtung verändert werden.

Gemäß einer besonders bevorzugten Ausführungsform weist die Sitzfederung einen zweiten in radialer Richtung verformbaren Federstab auf, welcher ein erstes Ende und ein zweites Ende aufweist, wobei das erste Ende des zweiten Federstabs und das zweite Ende des zweiten Federstabs mit dem Federungsunterteil verbunden sind und das Verbindungsteil den zweiten Federstab und die Schwenkachse verbindet.

Die Ausführungen betreffend den ersten Federstab können ebenso auf den zweiten Federstab zutreffen. Insbesondere liegt der zweite Federstab in der gemeinsamen Ebene.

Dadurch, dass ein erster Federstab und ein zweiter Federstab vorgesehen sein können, können die Federungseigenschaften der Federeinrichtung noch besser verändert werden. Ebenso ändert sich die Federrate oder Steifigkeit der Federeinrichtung.

Gemäß einer weiteren bevorzugten Ausführungsform weisen das erste Ende des ersten Federstabs und das erste Ende des zweiten Federstabs einen ersten Abstand zueinander und das zweite Ende des ersten Federstabs und das zweite Ende des zweiten Federstabs einen zweiten Abstand zueinander auf, wobei der erste Abstand kleiner ist als der zweite Abstand.

Dies hat insbesondere zur Folge, dass zumindest ein Federstab in einem Winkel zu der Schwenkachse angeordnet ist. Es kann jedoch auch sein, dass der erste Federstab und der zweite Federstab jeweils in einem Winkel zu der Schwenkachse angeordnet sind, insbesondere können der erste und der zweite Federstab symmetrisch zu der Schwenkachse angeordnet sein.

Gemäß einer weiteren bevorzugten Ausführungsform weist das Verbindungsteil einen ersten Durchgang und gegebenenfalls einen zweiten Durchgang auf, durch welche der erste Federstab und gegebenenfalls der zweite Federstab verlaufen. Bei einer Fahrt über sehr unebenes Terrain wird die Federeinrichtung starken Wechselbelastungen ausgesetzt. Dabei kann es durchaus sein, dass die Durchgänge des Verbindungsteils mit der Zeit ausschlagen und es zu einem unerwünschten Spiel in der Federung kommt. Dadurch, dass die Enden der Federstäbe in verschiedenen Abständen zueinander angeordnet sind, also die Federstäbe keilförmig zueinander verlaufen jedoch der Durchgangsabstand in dem Verbindungsteil konstant ist, verlaufen die Federungsstäbe bis zu dem Verbindungsteil im Wesentlichen parallel und nach dem Verbindungsteil nicht parallel. Hierdurch üben die Federstäbe eine seitliche Kraft auf die Durchgänge des Verbindungsteils aus, so dass entstehendes Spiel durch die vorhandene Vorspannung kompensiert werden kann und über längere Zeit nicht bemerkbar ist.

Gemäß einer weiteren bevorzugten Ausführungsform weist das Verbindungsteil eine wippenähnliche Struktur auf, wobei an einem ersten Ende der wippenähnlichen Struktur ein erstes Wippenelement und an dem zweiten Ende der wippenähnlichen Struktur ein zweites Wippenelement angeordnet ist, wobei zumindest das erste Wippenelement und das zweite Wippenelement mit dem Oberteil in Wirkkontakt stehen.

Durch diese wippenähnliche Ausgestaltung des Verbindungsteils kann das Verbindungsteil der Schwenkbewegung besonders gut folgen.

Insbesondere ist es vorteilhaft, wenn das Verbindungsteil mit wippenähnlicher Struktur einen Wippenpunkt aufweist, welcher in Höhenrichtung gesehen senkrecht unterhalb der Schwenkachse angeordnet ist und mit dem Unterteil in Wirkverbindung steht. Durch den Wippenpunkt, welcher mit dem Unterteil in Wirkverbindung steht, ist demnach das Verbindungsteil sowohl mit dem Oberteil als auch dem Unterteil in Wirkkontakt, wodurch das Verbindungsteil besonders gut der Schwenkbewegung des Oberteils gegenüber dem Unterteil folgen kann.

Gemäß einer weiteren bevorzugten Ausführungsform weisen das erste Wippenelement und das zweite Wippenelement jeweils einen ersten Bereich, welcher im Querschnitt trapezförmig ausgebildet ist, und einen zweiten Bereich, welcher im Querschnitt rechteckig ausgebildet ist, auf. Vorteilhaft ist der erste Bereich in Höhenrichtung gesehen unterhalb des zweiten Bereichs angeordnet.

Durch die trapezförmige Ausgestaltung wird ein Endanschlag des Verbindungsteils definiert, dadurch, dass wenn das Verbindungsteil so weit um die Schwenkachse verschwenkt wird, dass eine Seite, welche als Eckpunkt den Wippenpunkt aufweist, mit dem Unterteil in Verbindung steht. Vorzugsweise verlaufen die zueinander parallel verlaufenden Seiten des Trapezes in Höhenrichtung.

Bevorzugt sind der erste Federstab, die Verbindungseinheit und die Schwenkachse in Fahrzeugsitzhöhenrichtung gesehen zwischen dem Oberteil und dem Unterteil angeordnet. Hierdurch kann eine weitere Platzreduzierung vorgenommen werden.

Durch eine derartige erfindungsgemäße Anordnung der ersten Dämpfungseinrichtung ist es möglich, einen geringeren Platzbedarf der ersten Dämpfungseinrichtung zu erreichen bei nahezu nicht eingeschränkter Dämpfungsleistung. Gleiches gilt ebenso für die zweite Dämpfungseinrichtung.

Durch die Hebelanordnung kann der Hub des ersten Dämpfers bei einer Verschwenkung des Oberteils gegenüber dem Unterteil im Gegensatz zu einer direkten Anbringung des ersten Dämpfers an Oberteil und Unterteil vergrößert werden.

Die Dämpferleistung der Dämpfungseinrichtung kann noch weiter erhöht bzw. an Situationen angepasst werden, wenn gemäß einer bevorzugten Ausführungsform die Dämpfungseinrichtung zusätzlich einen vierten Dämpfer aufweist.

Noch bevorzugter weist die Dämpfungseinrichtung zusätzlich zum ersten Dämpfer und vierten Dämpfer noch einen fünften Dämpfer und einen sechsten Dämpfer auf.

Gemäß einer weiteren bevorzugten Ausführungsform sind der vierte Dämpfer, und gegebenenfalls der fünfte Dämpfer und der sechste Dämpfer ebenso wie der erste Dämpfer mittels Hebelelementen mit dem Oberteil bzw. dem Unterteil verbunden.

Gemäß einer weiteren bevorzugten Ausführungsform weist das erste Hebelelement eine erste Aussparung auf. Aussparung heißt hierbei, dass ein Freibereich des Hebelelements vorhanden ist, so dass bei einer Verschwenkung des Oberteils, was einhergeht mit einer Verschwenkung des ersten Hebelelements und des zweiten Hebelelements, gegenüber dem Unterteil ein Anschlag mit einer Anbindung bzw. Aufhängung des zweiten Hebelelements an dem Oberteil verhindert werden kann, insbesondere bei einer maximalen Auslenkung der Verschwenkung des Oberteils gegenüber dem Unterteil.

Gemäß einer weiteren bevorzugten Ausführungsform kann die Bewegung der Dämpfungseinrichtung, insbesondere des jeweiligen Dämpfers, verändert werden, wenn ein erster Abstand der fünften Schwenkachse zu der zweiten Schwenkachse größer ist als ein zweiter Abstand der dritten Schwenkachse zu der vierten Schwenkachse.

Hierdurch kann der Hub des jeweiligen Dämpfers bei einer Verschwenkung des Oberteils gegenüber dem Unterteil weiter verändert werden. Besonders bevorzugt ist der erste Abstand halb so groß wie der zweite Abstand.

Besonders bevorzugt ist ein dritter Abstand der fünften Schwenkachse zu der dritten Schwenkachse gleich dem ersten Abstand der dritten Schwenkachse zu der vierten Schwenkachse. Entsprechend ist ein vierter Abstand der dritten Schwenkachse zu der zweiten Schwenkachse gleich dem dritten Abstand.

Gemäß einer weiteren bevorzugten Ausführungsform ist eine Länge des Oberteils in Fahrzeugsitzlängsrichtung kürzer als eine Länge des Unterteils in Fahrzeugsitzlängsrichtung und wobei der jeweilige Dämpfer mit dem ersten Ende an einer Innenseite eines Unterteilabschnitts, welcher senkrecht zu dem Unterteil steht und damit verbunden ist, und das zweite Hebelelement an einer Außenseite eines Oberteilabschnitts, welcher senkrecht zu dem Oberteil steht, verbunden ist.

Bevorzugt sind das Unterteil sowie das Oberteil flächig ausgebildet. Der Oberteilabschnitt bzw. der Unterteilabschnitt sind ebenso flächig ausgebildet, mit dem Oberteil bzw. dem Unterteil verbunden und stehen dazu senkrecht.

Gemäß einer weiteren bevorzugten Ausführungsform sind der erste Dämpfer und der vierte Dämpfer achsensymmetrisch zu der Schwenkachse angeordnet.

Hierdurch ist es möglich, bei einer Verschwenkung des Oberteils gegenüber dem Unterteil gegen den Uhrzeigersinn und im Uhrzeigersinn um die Schwenkachse eine gleichmäßige Dämpfung zu erreichen. Insbesondere bedeutet das, dass auch die Hebelelemente entsprechend gleich ausgebildet sind. Die Symmetrie bezieht sich insbesondere auf den normalen Betriebszustand, das heißt, einem nicht ausgelenkten Betriebszustand. Bei einer Verschwenkung des Oberteils ändert sich natürlich die Lage und die Position der Dämpfer und entsprechend der Hebel abhängig von dem Oberteil.

Gemäß einer weiteren bevorzugten Ausführungsform sind ebenso der fünfte Dämpfer und der sechste Dämpfer achsensymmetrisch zu der Schwenkachse angeordnet.

Die Symmetrie bezieht sich auch hierbei insbesondere auf den normalen Betriebszustand, das heißt, einem nicht ausgelenkten Betriebszustand. Bei einer Verschwenkung des Oberteils ändert sich natürlich die Lage und die Position der Dämpfer und entsprechend der Hebel abhängig von dem Oberteil.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: schematisch Darstellung der Auslenkung des Fahrzeugsitzes;
- Fig. 1B: schematische Darstellung des Fahrzeugsitzes;
- Fig. 1C: Fahrzeugsitz gemäß einer bevorzugten Ausführungsform in einem normalen Betriebszustand;
- Fig. 1D: Fahrzeugsitz gemäß Figur 1A in einem ausgelenkten Betriebszustand;
- Fig. 2A: Federungseinrichtung des Fahrzeugsitzes in dem normalen Betriebszustand in einer Draufsicht;
- Fig. 2B: Federungseinrichtung gemäß Figur 2A gemäß Schnitt A - A;
- Fig. 2C: Ausschnittvergrößerung B der Figur 2B;
- Fig. 2D: Federungseinrichtung gemäß Figur 2A in einer Vorderansicht;
- Fig. 3A: Federungseinrichtung gemäß Figur 2A in einem ausgelenkten Betriebszustand;
- Fig. 3B: Ausschnittvergrößerung D der Figur 3A;
- Fig. 3C: Federungseinrichtung gemäß Figur 3A in einer Vorderansicht;
- Fig. 4: Federungseinrichtung in einer weiteren Draufsicht;
- Fig. 5A: Federungseinrichtung mit verschiebbarem Verbindungsteil in einer perspektivischen Ansicht;
- Fig. 5B: Federungsvorrichtung gemäß Figur 5A in einer Draufsicht;
- Fig. 6A: Dämpfungseinrichtung des Fahrzeugsitzes in dem normalen Betriebszustand in einer perspektivischen Ansicht;
- Fig. 6B: Dämpfungseinrichtung der Figur 6A in dem ausgelenkten Betriebszustand in einer perspektivischen Ansicht;
- Fig. 7A: Dämpfungseinrichtung gemäß Figur 6A in einem normalen Betriebszustand in einer Draufsicht;
- Fig. 7B: Dämpfungseinrichtung gemäß Figur 6A in einer Vorderansicht;
- Fig. 7C: Dämpfungseinrichtung gemäß Figur 6A in einem ausgelenkten Betriebszustand in einer Draufsicht;
- Fig. 7D: Dämpfungseinrichtung gemäß Figur 7C in einer Vorderansicht;
- Fig. 8A: Dämpfungseinrichtung gemäß dem Stand der Technik;
- Fig. 8B: schematische Darstellung der Dämpfungseinrichtung gemäß einer bevorzugten Ausführungsform;
- Fig. 9A: Wirkung der zweiten Dämpfungseinrichtung;
- Fig. 9B: Wirkung der ersten Dämpfungseinrichtung beziehungsweise der Federeinrichtung;
- Fig. 9C: Wirkung der ersten Dämpfungseinrichtung, der zweiten Dämpfungseinrichtung und der Federeinrichtung.

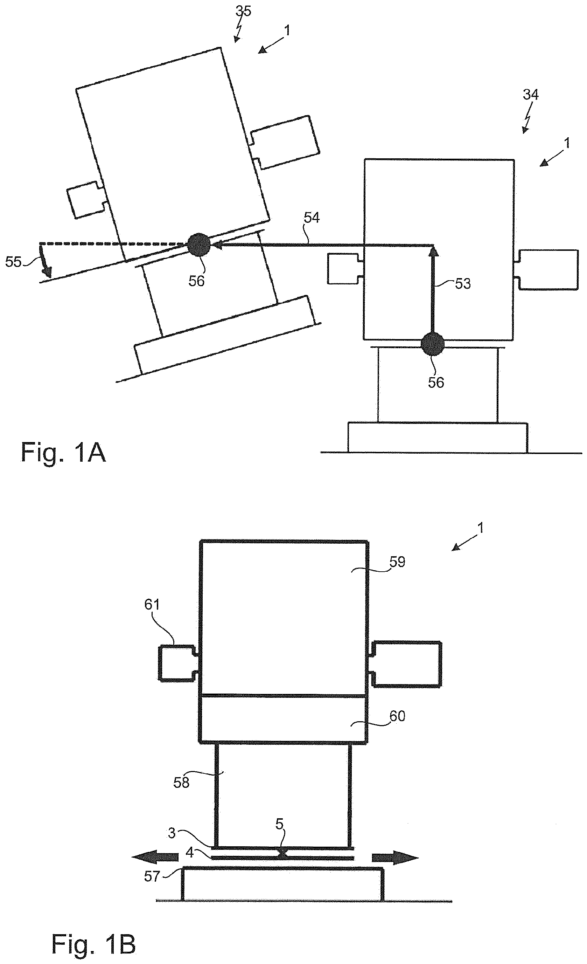

In der Figur 1A ist schematisch die Situation beim einseitigen Überfahren eines Hindernisses gezeigt, das heißt, dass ein Fahrzeug 33 (hier nicht gezeigt) einseitig ausgelenkt wird, in Bezug auf einen Fahrzeugsitz 1, welcher schematisch dargestellt ist. Der hier gezeigte Fahrzeugsitz 1 weist keinerlei Dämpfung oder Federung auf und auch keine Schwenkmöglichkeiten. Auf der rechten Seite der Figur 1A ist der Fahrzeugsitz 1 in einem normalen Betriebszustand 34 gezeigt.

Eine einseitige Auslenkung des Fahrzeugs 33 resultiert in verschiedenen Bewegungen, nämlich in eine vertikale Auslenkung in Fahrzeugsitzhöhenrichtung H nach oben, einer horizontalen Auslenkung in Fahrzeugsitzbreitenrichtung B und einer Rotation des Fahrzeugsitzes 1. Dargestellt ist hier die Bewegung des Schwerpunkts 56 des Fahrzeugsitzes 1. Links in der Figur 1A ist der Fahrzeugsitz 1 in einem ausgelenkten Betriebszustand zu erkennen. Normaler Betriebszustand heißt hier, dass der Fahrzeugsitz 1 noch nicht ausgelenkt ist; entsprechend bedeutet ausgelenkter Betriebszustand, dass der Fahrzeugsitz 1 ausgelenkt ist.

In der Figur 1B ist ein erfindungsgemäßer Fahrzeugsitz 1 schematisch dargestellt, wobei bestimmte Bauelemente hierbei gekennzeichnet sind.

Dabei trägt ein Oberteil 3 des Fahrzeugsitzes 1 eine Sitzerhöhung 58, auf welcher ein Sitzteil 60 und eine Rückenlehne 59 angeordnet sind. An der Rückenlehne 59 können Armlehnen 61 angeordnet sein. Das Oberteil 3 ist weiter gegenüber einem Unterteil 4 mittels einer Schwenkachse 5 um die Schwenkachse 5 verschwenkbar. Das Unterteil 4 hingegen ist gegenüber einer Karosserie 57 translatorisch verlagerbar angeordnet, angedeutet durch die Pfeile nach links und nach rechts.

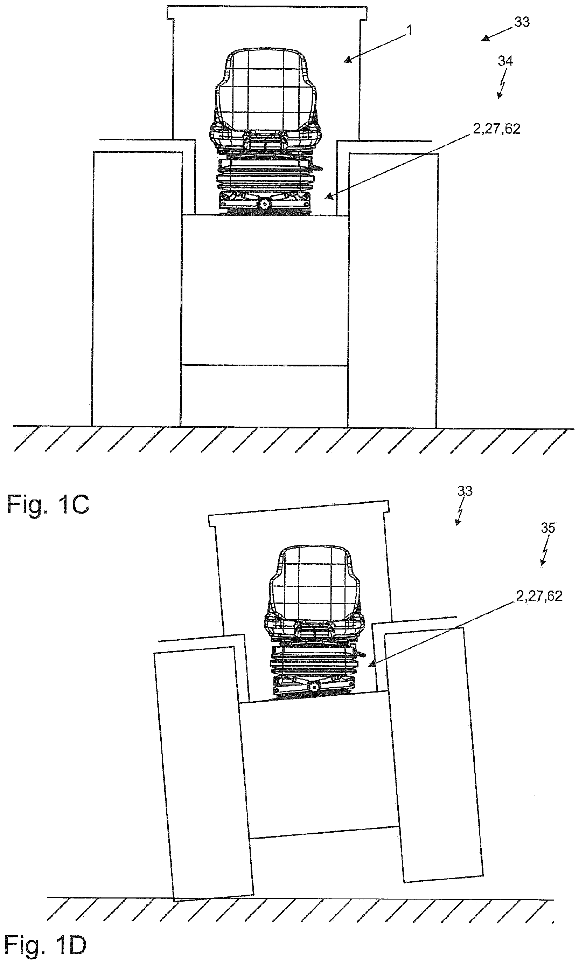

In der Figur 1C ist ein erfindungsgemäßer Fahrzeugsitz 1 zu erkennen, welcher in einer Kabine eines Fahrzeugs 33 montiert ist. Das Fahrzeug 33 und entsprechend der Fahrzeugsitz 1 sind in einem normalen Betriebszustand 34, das heißt, das Fahrzeug 33 bzw. der Fahrzeugsitz 1 sind nicht ausgelenkt.

In der Figur 1D ist der Fahrzeugsitz 1 der Figur 1C zu erkennen, wobei hier das Fahrzeug 33 bzw. der Fahrzeugsitz 1 sich in einem ausgelenkten Betriebszustand 35 befinden. Insbesondere wird das Fahrzeug 33 lediglich auf einer Seite ausgelenkt, vorliegend betrachtet die rechte Seite. Der Fahrzeugsitz 1 weist entsprechend eine vertikale Auslenkung 53, eine horizontale Auslenkung 54 und eine Rotation 55 auf, wobei der jeweiligen Bewegung erfindungsgemäß durch eine Federungseinrichtung 2, eine erste Dämpfungseinrichtung 27 und eine zweite Dämpfungseinrichtung 62 entgegengewirkt wird.

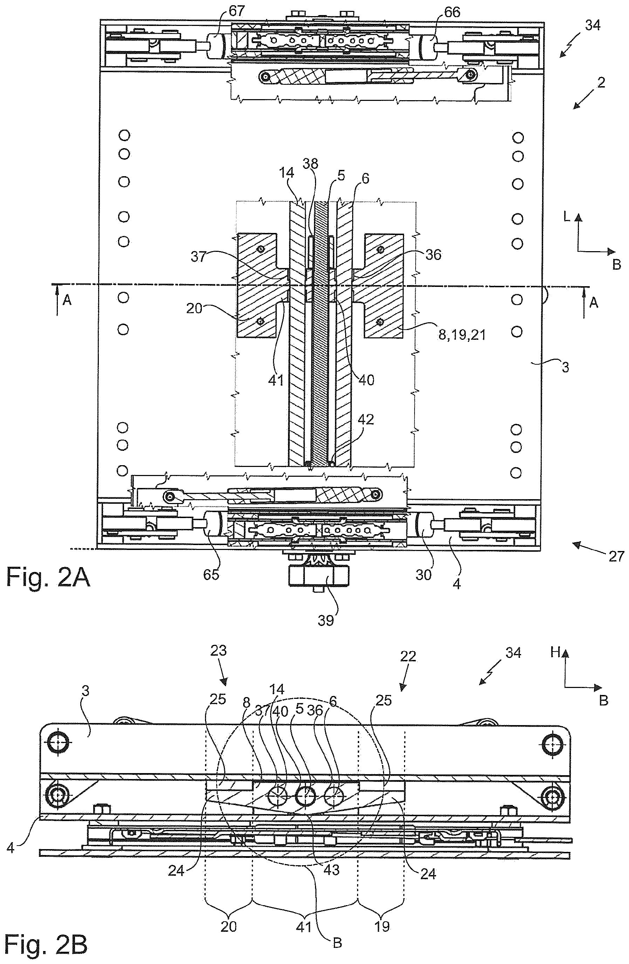

Die Figur 2A zeigt dabei die erfindungsgemäße Federungsvorrichtung 2 des Fahrzeugsitzes 1 gemäß einer bevorzugten Ausführungsform in einer Draufsicht.

Es ist ein Verbindungsteil 8 vorgesehen, welches einen ersten Durchgang 36 und einen zweiten Durchgang 37 aufweist, wobei sich ein erster Federstab 6 durch den ersten Durchgang 36 und ein zweiter Federstab 14 sich durch den zweiten Durchgang 37 erstreckt. Die Durchgänge 36, 37 erstrecken sich hierbei in einer Fahrzeugsitzlängsrichtung L. Weiter ist ein dritter Durchgang 40 zu erkennen, durch welchen sich die Schwenkachse 5 erstreckt, wobei die Schwenkachse 5 mit dem Verbindungsteil 8 in Wirkverbindung steht.

Weiter ist das Verbindungsteil 8 mit einer wippenähnlichen Struktur 21 umfassend ein erstes Wippenelement 19 und ein zweites Wippenelement 20, welche durch ein Mittelelement 41 miteinander verbunden sind. Insbesondere weist das Mittelelement 41 durch Durchgänge 36, 37, 40 auf.

Weiter weist die Federungsvorrichtung 2 einen Drehknopf 39 auf, welcher mit der Schwenkachse 5 verbunden ist. Durch Betätigung des Drehknopfes 39, das heißt durch Drehung des Drehknopfes wird ebenso die Schwenkachse 5 um ihre eigene Achse gedreht. Durch Drehung der Schwenkachse 5 wird dabei das Verbindungsteil 8 in Fahrzeugsitzlängsrichtung L nach hinten oder nach vorne verlagert, wodurch die Federeigenschaften der Federeinrichtung 2 einstellbar sind.

Bezüglich dieser Verlagerung des Verbindungsteils 8 in Fahrzeugsitzlängsrichtung L sind ein erstes Stoppelement 38 und ein zweites Stoppelement 42 vorgesehen, welche die Verlagerung des Verbindungsteils 8 in Fahrzeugsitzlängsrichtung L begrenzen.

Insbesondere ist das erste Stoppelement 38 derart angeordnet, so dass das Verbindungselement 8 beim Erreichen des ersten Stoppelements 38 in einer Mittellage positioniert ist, das heißt, dass das Verbindungsteil 8 symmetrisch bezüglich der Mitte des Oberteils 3 ist, wobei die Mitte in Fahrzeugsitzlängsrichtung L gemeint ist.

Weiter ist eine Dämpfungseinrichtung 27 der Figur 2A zu entnehmen, mit einem ersten Dämpfer 30, wobei hier auch ein vierter Dämpfer 65, ein fünfter Dämpfer 66 und ein sechster Dämpfer 67 der ersten Dämpfungseinrichtung 21 vorgesehen sind.

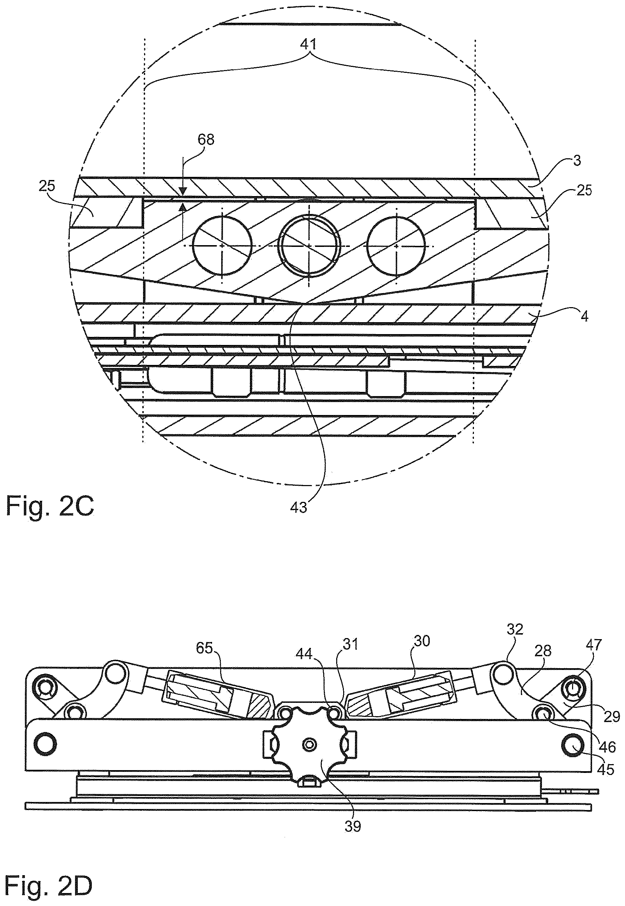

Die Figur 2B zeigt den Schnitt A-A, welcher in der Figur 2A eingezeichnet ist. Die Figur 2C zeigt einen Ausschnitt B der Figur 2B in einer Vergrößerung. Figur 2D zeigt eine Vorderansicht der Figur 2A.

Näher eingehend auf die Figur 2B ist ein Querschnitt durch das Verbindungsteil 8 dargestellt, und wobei das Verbindungsteil 8 eine wippenähnliche Struktur 21 aufweist, mit einem ersten Ende 22 und einem zweiten Ende 23. An dem ersten Ende 22 der Struktur 21 ist ein erstes Wippenelement 19 und an dem zweiten Ende 23 der Struktur ein zweites Wippenelement 20 angeordnet. Jedes Wippenelement 19, 20 weist einen trapezförmigen Bereich 24 und einen rechteckigen Bereich 25 auf, wobei sich diese Ausgestaltung (Trapez, Rechteck) auf den dargestellten Querschnitt bezieht. Darüber hinaus ist der rechteckige Bereich 25 jeweils in Fahrzeugsitzhöhenrichtung H gesehen über dem trapezförmigen Bereich 24 angeordnet und steht mit dem Oberteil 3 in Wirkkontakt.

Das Mittelelement 41 weist den ersten Durchgang 36, den zweiten Durchgang 37 sowie den dritten Durchgang 40 auf, wobei der erste Federstab 6 sich durch den ersten Durchgang 36, der zweite Federstab 14 sich durch den zweiten Durchgang und die Schwenkachse 5 sich durch den dritten Durchgang 40 erstreckt.

Das Mittelelement umfasst auch einen Wippenpunkt 43, mittels welchem das Verbindungsteil 8 mit dem Unterteil 4 wirkverbunden ist.

In der Ausschnittsvergrößerung B der Figur 2B, dargestellt in der Figur 2C, ist zu sehen, dass das Mittelelement 41 mit dem Oberteil 3 nicht in Wirkkontakt steht, sondern lediglich das erste Wippenelement 19 und das zweite Wippenelement 20, insbesondere der rechteckige Bereich 25. Der rechteckige Bereich 25 kann dabei aus verschiedenen Materialien gefertigt sein, beispielsweise aus einem Material, vorzugsweise einem gleitfähigen Material, mit vorzugsweise schwach ausgeprägten Federungs- und/oder Dämpfungseigenschaften. Das Mittelelement 41 weist insbesondere eine Entfernung 68 zu dem Oberteil 3 auf.

Die Figur 2D zeigt eine Vorderansicht der Federungsvorrichtung 2, wobei die erste Dämpfungseinrichtung 21 vorgesehen ist mit einen ersten Dämpfer 30 mit einem ersten Ende 31 und einem zweiten Ende 32 umfasst, wobei das erste Ende 31 schwenkbar mittels einer ersten Schwenkachse 44 mit dem Unterteil 4 verbunden ist und das zweite Ende 32 mit einem ersten Hebelelement 28 verbunden ist, wobei das erste Hebelelement 28 schwenkbar mittels einer zweiten Schwenkachse 45 mit dem Unterteil 4 verbunden ist und ein zweites Hebelelement 29 vorgesehen ist, welches schwenkbar mittels einer dritten Schwenkachse 46 mit dem ersten Hebelelement 28 und schwenkbar mittels einer vierten Schwenkachse 47 mit dem Oberteil 3 verbunden ist.

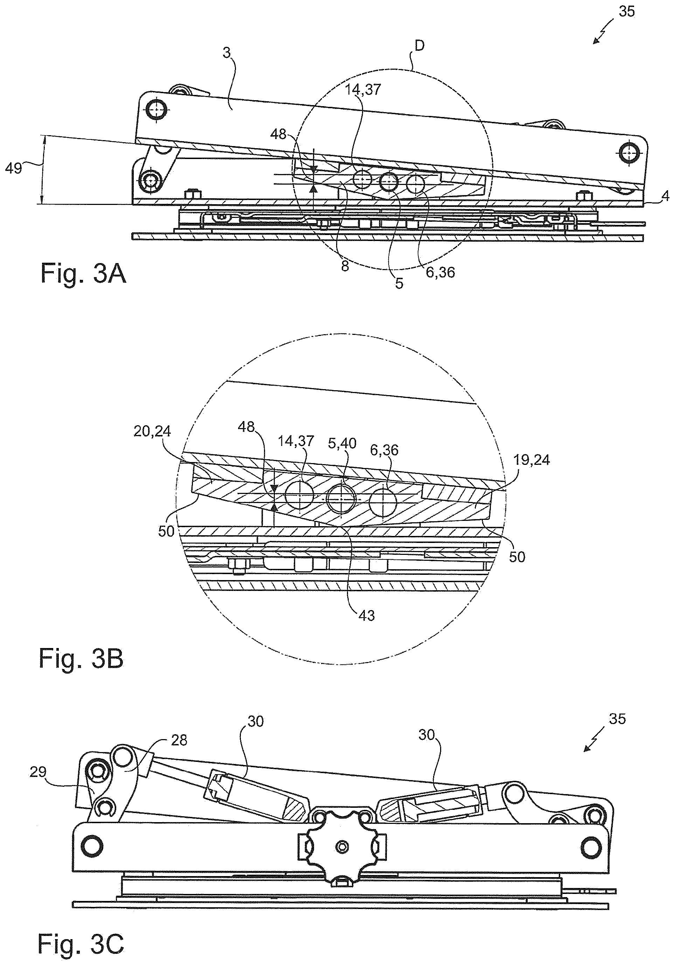

Die Figur 3A zeigt die Federeinrichtung 2 in einem ausgelenkten Betriebszustand 35, das heißt, dass das Oberteil 3 eine Schwenkbewegung gegenüber dem Unterteil 4 durchführt. Da hierbei das Verbindungsteil 8 in Wirkkontakt einerseits mit dem Oberteil 3 steht, wird ebenso das Verbindungsteil 8 um die Schwenkachse 5 verschwenkt. Dies hat zur Folge, dass ebenso die Durchgänge 36, 37 um die Schwenkachse 5 verschwenkt werden und konsequenterweise auch der erste Federstab 6 und der zweite Federstab 14; mitunter werden die Federstäbe 6, 14 hierbei elastisch deformiert. Ebenso steht das Verbindungsteil 8 mittels dem Wippenpunkt 43 mit dem Unterteil 4 in Wirkkontakt, so dass das Verbindungsteil 8 um diesen Wippenpunkt 43 geschwenkt wird.

Waren im normalen Betriebszustand 34 das Oberteil 3 und das Unterteil 4 im Wesentlichen parallel zueinander angeordnet, so schließen das Oberteil 3 und das Unterteil 4 im ausgelenkten Betriebszustand 35 nun einen Winkel 49 ein und der erste Federstab 6 und der zweite Federstab 14 sind nun um einen Wert einer Auslenkung 48 in Fahrzeugsitzhöhenrichtung H zueinander verschoben.

Die Figur 3B zeigt eine Vergrößerung des Bereiches B der Figur 3A. Insbesondere die Auslenkung des ersten Federstabs 6 zu dem zweiten Federstab 14 ist hierbei noch besser zu erkennen. Die Schwenkachse 5 wird in ihrer Position bzw. Lage nicht verändert durch die Schwenkbewegung.

Weiter ist eine Seite 50 des trapezförmigen Bereichs 24 des ersten Wippenelements 19 zu erkennen, welche den Wippenpunkt 43 umfasst und welche als Begrenzung der Schwenkbewegung des Oberteils 3 fungieren kann. Steht die Seite 50 mit dem Unterteil 4 in Kontakt, so ist ein weiteres Verschwenken des Oberteils 3 gegenüber dem Unterteil 4 in diese Richtung nicht mehr möglich. Gleiches gilt natürlich für den weiteren trapezförmigen Bereich 24 des zweiten Wippenelements 20.

Die Figur 3C zeigt ebenso wie die Figur 2D eine Vorderansicht der Federeinrichtung 2, jedoch in dem ausgelenkten Betriebszustand 35. Der Figur 3C ist dabei insbesondere gut die Bewegung des ersten Hebelelements 28 und des zweiten Hebelelements 29 zu erkennen.

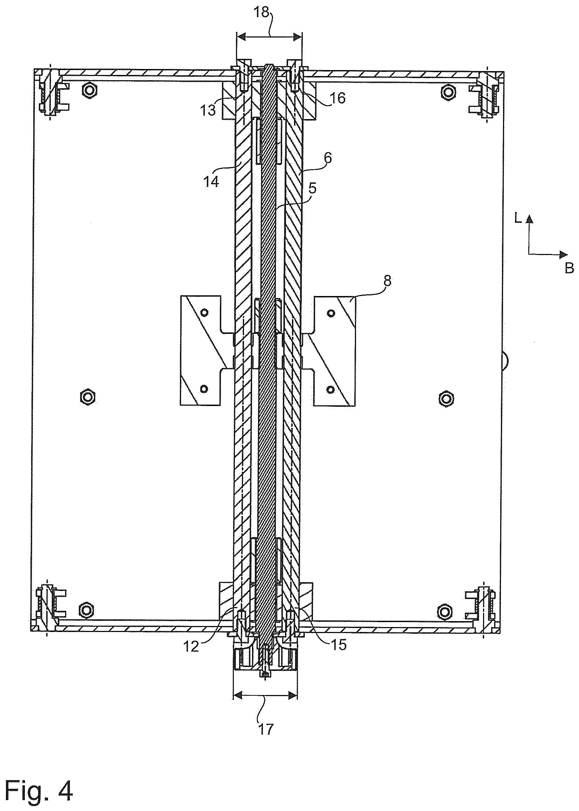

Die Figur 4 zeigt eine besonders bevorzugte Ausgestaltungsmöglichkeit der Federeinrichtung 2, wobei das erste Ende 12 des ersten Federstabs 6 und das erste Ende 15 des zweiten Federstabs 14 in einem ersten Abstand 17 und das zweite Ende 13 des ersten Federstabs 6 und das zweite Ende 16 des zweiten Federstabs 14 in einem zweiten Abstand 18 zueinander angeordnet sind. Der jeweilige Abstand 17, 18 wird hierbei in Fahrzeugsitzbreitenrichtung B angesetzt gemessen. Außerdem wird der jeweilige Abstand 17, 18 von den am weitesten voneinander entfernten Punkten der Federstäbe 6, 14 oder alternativ von den Mittelachsen der Federstäbe 6, 14 gemessen. Der erste Abstand 17 ist kleiner als der zweite Abstand 18, das heißt insbesondere, dass die Federstäbe 6, 14 nicht parallel zueinander verlaufen, sondern in einem Winkel zueinander.

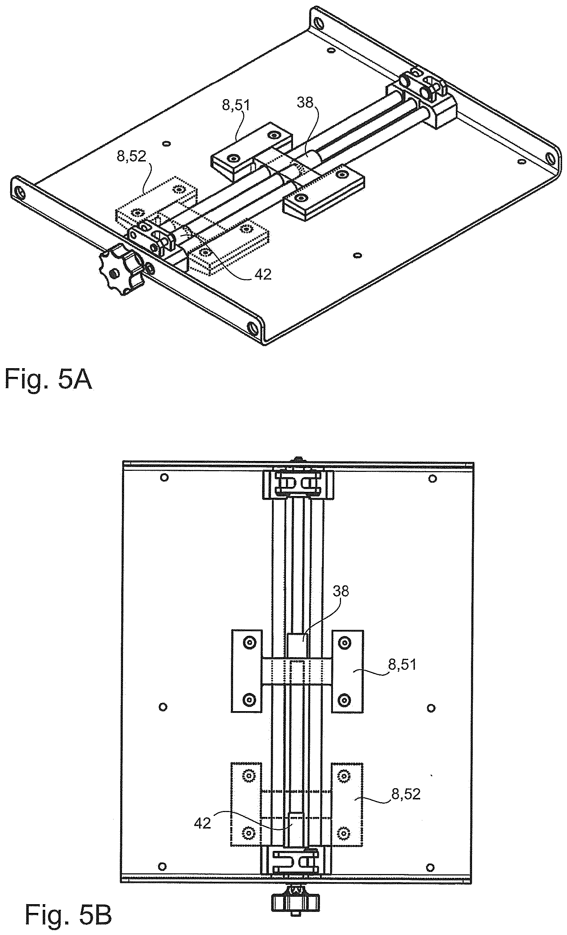

Die Figuren 5A und 5B zeigen das Verbindungsteil 8 in der Mittellage 51 und in einer verschobenen Lage 52, wobei die verschobene Lage 52 gepunktet dargestellt ist. Die Figur 5A ist eine perspektivische Ansicht, die Figur 5B eine Draufsicht.

Die Mittellage 51 sowie die verschobene Lage 52 sind die Maximallagen des Verbindungsteils 8, das heißt, dass das Verbindungsteil 8 nur noch Positionen zwischen der Mittellage 51 und der verschobenen Lage 52 einnehmen kann. Begrenzt wird die Verlagerung des Verbindungsteils 8 durch ein erstes Stoppelement 38 und ein zweites Stoppelement 42.

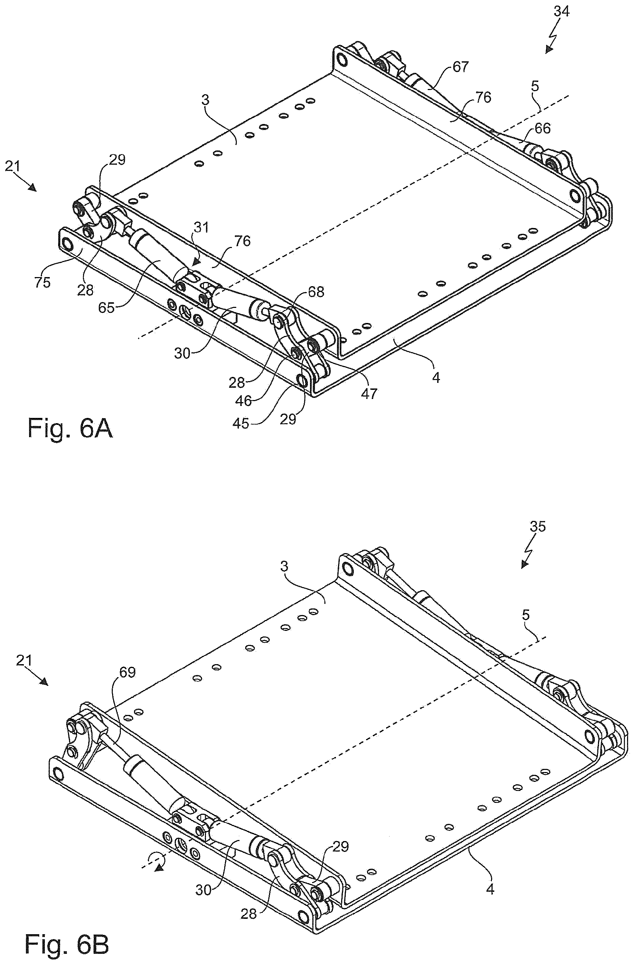

Die Figur 6A zeigt eine besonders bevorzugte Ausführungsform einer ersten Dämpfungsvorrichtung 21, welche vorliegend einen ersten Dämpfer 30, einen vierten Dämpfer 65, einen fünften Dämpfer 66 und einen sechsten Dämpfer 67 umfasst. Jeder dieser Dämpfer 30, 65, 66, 67 weist ein erstes Ende 31 und ein zweites Ende 32 auf, wobei das erste Ende 31 des Dämpfers 30, 65, 66, 67 mittels einer ersten Schwenkachse 44 schwenkbar mit dem Unterteil 4 verbunden ist, und wobei das zweite Ende 32 des Dämpfers 30, 65, 66, 67mittels einer fünften Schwenkachse 68 mit einem ersten Hebelelement 28 schwenkbar verbunden ist. Das erste Hebelelement 28 ist andererseits mittels einer zweiten Schwenkachse 45 schwenkbar mit dem Unterteil 4 verbunden, wobei ein zweites Hebelelement 29 vorgesehen ist, welches mittels einer dritten Schwenkachse 46 mit dem ersten Hebelelement 28 schwenkbar verbunden ist und mittels einer vierten Schwenkachse 47 schwenkbar mit dem Oberteil 3 verbunden ist.

Das Oberteil 3 ist schwenkbar um die Schwenkachse 5 verbunden, so dass das Oberteil 3 gegenüber dem Unterteil 4 verschwenkt werden kann. Ebenso ist die Schwenkachse 5 mit dem Unterteil 4 verbunden.

Das bedeutet, dass das zweite Ende 32 des Dämpfers 30, 65, 66, 67 im Gegensatz zum ersten Ende 31 nicht starr bis auf Drehung mit dem Oberteil 3 verbunden ist, sondern über die Hebelanordnung umfassend das erste Hebelelement 28 und das zweite Hebelelement 29.

Durch eine derartige Anordnung der Dämpfer 30, 65, 66, 67 ist eine lineare oder nichtlineare Über- oder Untersetzung des Hubes des Dämpfers 30, 65, 66, 67 relativ zu der Bewegung des Oberteils 3 erreichbar, wie in Bezug auf die nachfolgenden Figuren genauer erläutert wird.

In der Figur 6B ist der Gegenstand der Figur 6A zu erkennen, jedoch in einer ausgelenkten Position 35, das heißt, dass das Oberteil 3 gegenüber dem Unterteil 4 um die Schwenkachse 5 verschwenkt ist. Entsprechend ist zu erkennen, dass der Hub der Dämpfer 30, 65, 66, 67 entsprechend verändert ist, das heißt, dass die Länge des ausgefahrenen Kolbens 69 für jeden Dämpfer 30, 65, 66, 67 verändert ist.

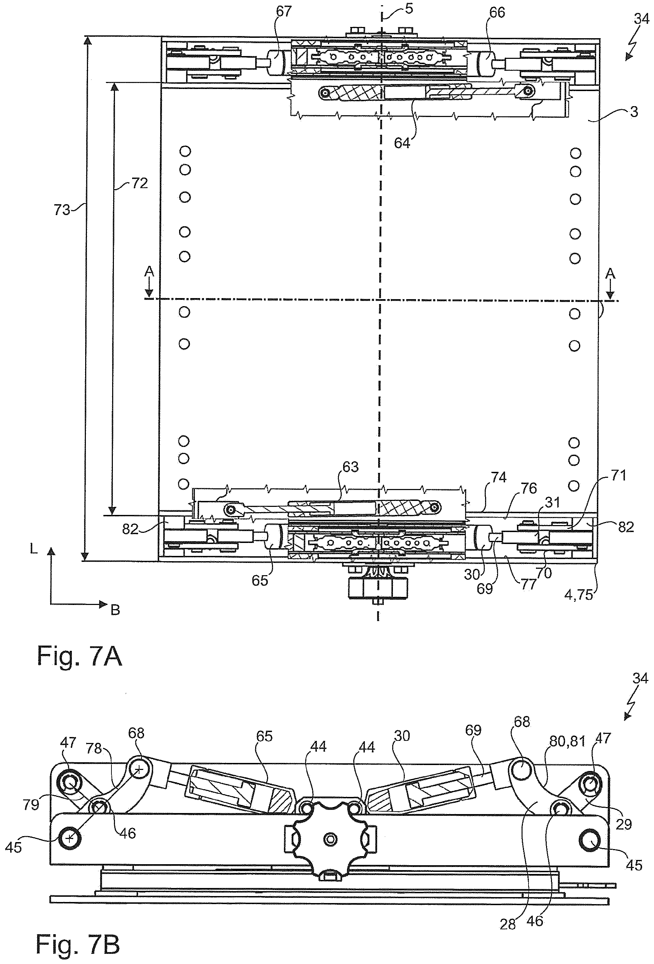

Die Figur 7A zeigt die erste Dämpfungseinrichtung 21 in einer Draufsicht gemäß einer bevorzugten Ausführungsform in dem normalen Betriebszustand 34. Die Ausführungen zum ersten Dämpfer 30 gelten entsprechend für auch für den vierten Dämpfer 65, den fünften Dämpfer 66 und den sechsten Dämpfer 67.

Insbesondere sind der erste Dämpfer 30 und der vierte Dämpfer 65 symmetrisch zu der Schwenkachse 5 angeordnet. Gleiches gilt ebenso für die fünften Dämpfer 66 und den sechsten Dämpfer 67.

Weiter ist zu erkennen, dass das erste Hebelelement 28 mit dem zweiten Ende 31 des ersten Dämpfers 30 verbunden ist und umfasst ein erstes Hebelelementteil 70 und ein zweites Hebelelementteil 71, wobei das zweite Ende 31 des Dämpfers 30, 65, 66, 67 zwischen dem ersten Hebelelementteil 70 und dem zweiten Hebelelementteil 71, in Fahrzeugsitzlängsrichtung L gesehen, angeordnet ist.

Ebenso sind die Dämpfer 30, 65, 66, 67 jeweils in Fahrzeugsitzbreitenrichtung B verlaufend angeordnet.

Insbesondere weist das Oberteil 3 eine Länge 72, in Fahrzeugsitzlängsrichtung L gesehen, auf, welche gegenüber einer Länge 73 des Unterteils 4, ebenso in Fahrzeugsitzlängsrichtung L gesehen, kleiner ist. Weiter weist das Oberteil 3 einen Oberteilabschnitt 74 und das Unterteil 4 einen Unterteilabschnitt 75 auf, welche jeweils senkrecht dazu verlaufend ausgebildet sind. Die Dämpfer 30, 65, 66, 67 sind, in Fahrzeugsitzlängsrichtung L betrachtet, zwischen einer Außenseite 76 des Oberteilabschnitts 74 und einer Innenseite 77 des Unterteilabschnitts 75. Durch eine derartige Ausgestaltung bzw. derartige Anbringung der Dämpfer 30, 65, 66, 67 ist eine weitere Platzreduzierung möglich gegenüber dem Stand der Technik.

Weiter ist ein zweiter Dämpfer 63 und ein dritter Dämpfer 64 der zweiten Dämpfungseinrichtung 62 zu erkennen, wobei der zweite Dämpfer 63 parallel zu dem dritten Dämpfer 64 angeordnet ist. Bewusst sind die Dämpfer 63, 64 in einer Ebene, parallel zu der Ebene, gebildet aus Fahrzeugsitzlängsrichtung L und Fahrzeugsitzbreitenrichtung B, angeordnet

Die Figur 7B zeigt den Gegenstand der Figur 7A in einer Vorderansicht, ebenfalls in dem normalen Betriebszustand 34.

Wie der Figur 7B zu entnehmen ist, ist ein dritter Abstand 78 zwischen der fünften Schwenkachse 68 und der zweiten Schwenkachse 45 größer als ein vierter Abstand 79 zwischen der dritten Schwenkachse 46 und der vierten Schwenkachse 47. Bevorzugt ist der dritte Abstand 78 doppelt so groß wie der vierte Abstand 79.

Darüber hinaus weist das erste Hebelelement 28 eine erste Aussparung 80 auf. Genauer gesagt weisen das erste Hebelelementteil 70 und das zweite Hebelelementteil 71 des ersten Hebelelements 28 jeweils eine erste Aussparung 80 auf. Die erste Aussparung 80 ist dabei wie folgt ausgebildet.

Das erste Hebelelement 28 bzw. die Hebelelementteile 70, 71 sind dabei flächig ausgebildet, und das erste Hebelelement 28 bzw. die Hebelelementteile 70, 71 liegen vorzugsweise in einer Ebene oder parallelen Ebenen, welche gebildet wird/werden aus der Fahrzeugsitzbreitenrichtung B und Fahrzeugsitzhöhenrichtung H mit einer Ausdehnung in Fahrzeugsitzlängsrichtung L.

Dadurch, dass das erste Hebelelement 28 ein erstes Hebelelementteil 70 und ein zweites Hebelelementteil 71 umfasst und dass das zweite Ende 31 des Dämpfers 30, 65, 66, 67, in Fahrzeugsitzlängsrichtung L gesehen, zwischen dem ersten Hebelelementteil 70 und dem zweiten Hebelelementteil 71 angeordnet ist, ist es möglich, dass bei einer maximalen Verschwenkung des Oberteils 3 gegenüber dem Unterteil 4 um die Schwenkachse 5 das erste Hebelelement 28 mit der vierten Schwenkachse 47 kollidiert. Die erste Aussparung 80 ist hierbei derart ausgestaltet, dass bei einer maximalen Verschwenkung des Oberteils 3 dieses Kollidieren nicht geschieht. Insbesondere ist eine Seite 81, welche dem Dämpfer 30, 65, 66, 67 abgewandt sind, bogenförmig ausgebildet.

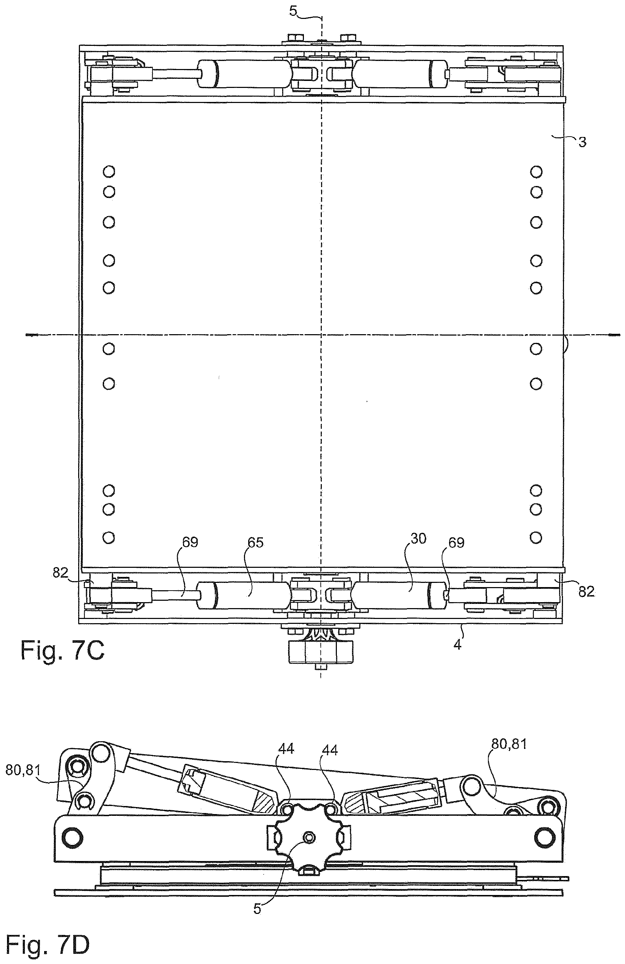

Eine derartige Situation bei einer maximalen Verschwenkung des Oberteils 3 gegenüber dem Unterteil 4 ist in den Figuren 7C und 7D dargestellt. Dadurch, dass die Seite 81 bogenförmig bzw. kurvenförmig ausgebildet ist, kann eine Kollision mit dem zweiten Hebelelement 29 bzw. der Aufhängung 82 des zweiten Hebelelements 29 an dem Oberteil 3 zu verhindern.

Ebenso ist erkennbar, dass die erste Schwenkachse 44 in Fahrzeugsitzhöhenrichtung H gesehen über der Schwenkachse 5 angeordnet ist.

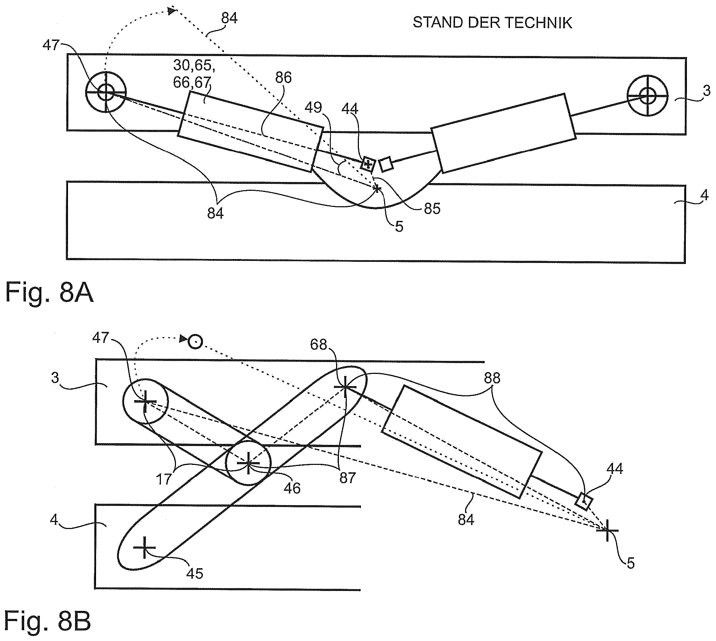

In der Figur 8B ist das zugrunde liegende Funktionsprinzip im Gegensatz zum Funktionsprinzip aus dem Stand der Technik, wie in der Figur 48 dargestellt, gezeigt.

Die Figur 8A zeigt eine ortsfeste Aufhängung des Dämpfers 30, 65, 66, 67 an dem Unterteil 4 und eine ortsfeste Aufhängung an dem Oberteil 3. Ortsfest bedeutet hier ortsfest bis auf Drehung. Bei einer Verschwenkung des Oberteils 3 um die Schwenkachse 5 um einen Winkel 83, wird ebenso der Dämpfer 30, 65, 66, 67 um die erste Schwenkachse 44 verschwenkt. Dabei ist ein fünfter Abstand 84 der vierten Schwenkachse 47 zu der Schwenkachse 5 sowie ein sechster Abstand 85 der Schwenkachse 5 zu der ersten Schwenkachse 44 konstant, eine Veränderliche ist die Länge 86 der ersten Schwenkachse 44 zu der vierten Schwenkachse 47, einhergehend mit einer Veränderung des Hubes des Dämpfers 30, 65, 66, 67. Durch eine derartige Aufhängung ist lediglich eine geringe Veränderung des Hubes des Dämpfers 30, 65, 66, 67 möglich.

Die Figur 8B hingegen zeigt die Funktionsweise der erfindungsgemäßen ersten Dämpfungseinrichtung 21.

Wie beim Stand der Technik ist der fünfte Abstand 84 weiterhin konstant, sowie der sechste Abstand 85. Jedoch ist die Länge 86 der ersten Schwenkachse 44 zu der vierten Schwenkachse 47 über das erste Hebelelement 28 und das zweite Hebelelement 29 grundlegend anders. Die Länge 86 wird nun zusammengesetzt aus dem ersten Abstand 17, dem siebten Abstand 87 von der dritten Schwenkachse 46 zu der fünften Schwenkachse 68 und dem achten Abstand 88 der fünften Schwenkachse 68 zu der ersten Schwenkachse 44. Durch diese Hebelanordnung kann insbesondere der achte Abstand 88 deutlich gegenüber dem Stand der Technik verändert werden, einhergehend mit einer deutlich größeren Hubänderung des Dämpfers 30, 65, 66, 67 bei gleicher Auslenkung des Oberteils 3.

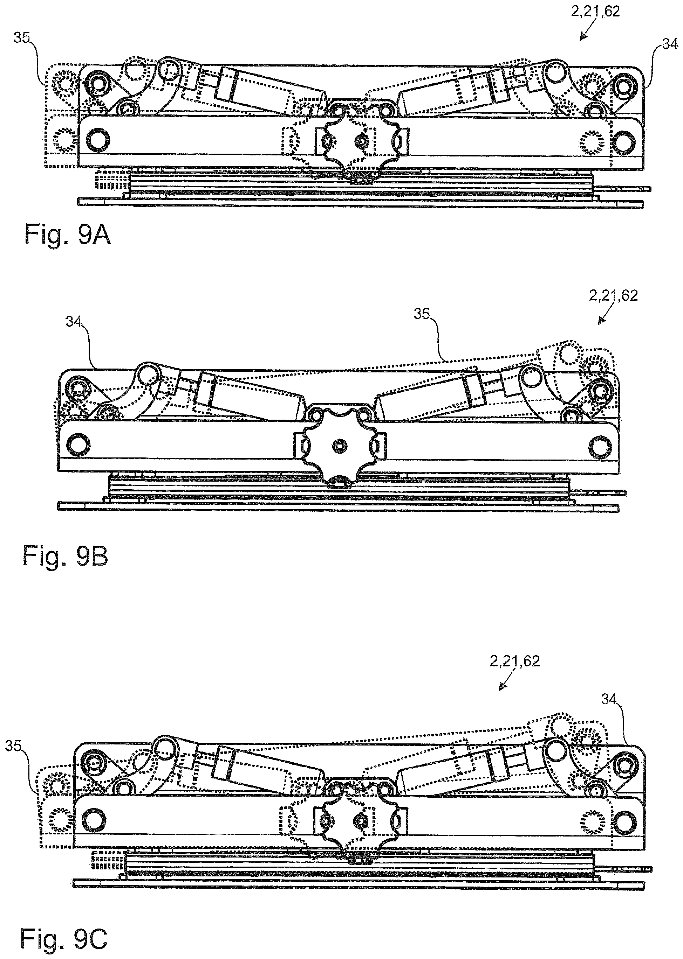

Die Figuren 9A, 9B und 9C sind jeweils Vorderansichten, wobei die Figur 9A die Wirkungsweise der zweiten Dämpfungseinrichtung 62, die Figur 9B die Wirkungsweise der Federungseinrichtung 2 sowie der ersten Dämpfungseinrichtung 21 und die Figur 9C die Wirkungsweise der Kombination der Federeinrichtung 2, der ersten Dämpfungseinrichtung 21 und der zweiten Dämpfungseinrichtung 62 zeigt.

Der normale Betriebszustand 34 ist dargestellt durch durchgezogene Linien, der ausgelenkte Betriebszustand durch gestrichelte Linien.

### Bezugszeichenliste

- 1: Fahrzeugsitz
- 2: Federeinrichtung
- 3: Oberteil
- 4: Unterteil
- 5: Schwenkachse
- 6: erster Federstab
- 7: Ebene
- 8: Verbindungsteil
- 9: Lagerwelle
- 10: erstes Ende der Schwenkachse
- 11: zweites Ende der Schwenkachse
- 12: erstes Ende des ersten Federstabs
- 13: zweites Ende des ersten Federstabs
- 14: zweiter Federstab
- 15: erstes Ende des zweiten Federstabs
- 16: zweites Ende des zweiten Federstabs
- 17: erster Abstand
- 18: zweiter Abstand
- 19: erstes Wippenelement
- 20: zweites Wippenelement
- 21: wippenähnliche Struktur
- 22: erstes Ende der wippenähnlichen Struktur
- 23: zweites Ende der wippenähnlichen Struktur
- 24: trapezförmiger Bereich
- 25: rechteckiger Bereich
- 26: Längshorizontalfederung
- 27: erste Dämpfungseinrichtung
- 28: erstes Hebelelement
- 29: zweites Hebelelement
- 30: erster Dämpfer
- 31: erstes Ende des Dämpfers
- 32: zweites Ende des Dämpfers
- 33: Fahrzeug
- 34: normaler Betriebszustand
- 35: ausgelenkter Betriebszustand
- 36: erster Durchgang
- 37: zweiter Durchgang
- 38: erstes Stoppelement
- 39: Drehknopf
- 40: dritter Durchgang
- 41: Mittelelement
- 42: zweites Stoppelement
- 43: Wippenpunkt
- 44: erste Schwenkachse
- 45: zweite Schwenkachse
- 46: dritte Schwenkachse
- 47: vierte Schwenkachse
- 48: Auslenkung
- 49: Winkel
- 50: Seite
- 51: Mittellage
- 52: verschobene Lage
- 53: vertikale Auslenkung
- 54: horizontale Auslenkung
- 55: Rotation
- 56: Schwerpunkt
- 57: Karosserie
- 58: Sitzerhöhung
- 59: Rückenlehne
- 60: Sitzteil
- 61: Armlehne
- 62: zweite Dämpfungseinrichtung
- 63: zweiter Dämpfer
- 64: dritter Dämpfer
- 65: vierter Dämpfer
- 66: fünfter Dämpfer
- 67: sechster Dämpfer
- 68: fünfte Schwenkachse
- 69: Kolben
- 70: erstes Hebelelementteil
- 71: zweites Hebelelementteil
- 72: Länge des Oberteils
- 73: Länge des Unterteils
- 74: Oberteilabschnitt
- 75: Unterteilabschnitt
- 76: Außenseite
- 77: Innenseite
- 78: dritter Abstand
- 79: vierter Abstand
- 80: Aussparung
- 81: Seite
- 82: Aufhängung
- 83: Winkel
- 84: fünfter Abstand
- 85: sechster Abstand
- 86: Länge
- 87: siebter Abstand
- 88: achter Abstand
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit einer Federeinrichtung (2) zum Federn von Schwenkbewegungen und mit einer ersten Dämpfungseinrichtung (27) zum Dämpfen der Schwenkbewegungen eines Oberteils (3) des Fahrzeugsitzes (1) gegenüber einem Unterteil (4) des Fahrzeugsitzes (1) um eine in einer Fahrzeugsitzlängsrichtung (L) oder Fahrzeugsitzbreitenrichtung (B) verlaufend angeordnete Schwenkachse (5) und mit einer zweiten Dämpfungseinrichtung (62) zum Dämpfen einer Translationsbewegung des Fahrzeugsitzes (1),
**dadurch gekennzeichnet, dass**
die Federeinrichtung (2) einen ersten in transversaler Richtung elastisch verformbaren und in einer Fahrzeugsitzlängsrichtung (L) oder Fahrzeugsitzbreitenrichtung (B) verlaufenden Federstab (6) und ein um die Schwenkachse (5) verschwenkbares Verbindungsteil (8) aufweist, welches den ersten Federstab (6) und die Schwenkachse (5) verbindet, um bei einer Verschwenkung des Oberteils (3) den ersten Federstab (6) zu verformen,
wobei die erste Dämpfungseinrichtung (27) einen ersten Dämpfer (30) mit einem ersten Ende (31) und einem zweiten Ende (32) umfasst, wobei das erste Ende (31) schwenkbar mittels einer ersten Schwenkachse (44) mit dem Unterteil (4) verbunden ist und das zweite Ende (32) schwenkbar mittels einer fünften Schwenkachse (68) mit einem ersten Hebelelement (28) verbunden ist, wobei das erste Hebelelement (28) schwenkbar mittels einer zweiten Schwenkachse (45) mit dem Unterteil (4) verbunden ist und ein zweites Hebelelement (29) vorgesehen ist, welches schwenkbar mittels einer dritten Schwenkachse (46) mit dem ersten Hebelelement (28) und schwenkbar mittels einer vierten Schwenkachse (47) mit dem Oberteil (3) verbunden ist,
und wobei die zweite Dämpfungseinrichtung (62) einen zweiten Dämpfer (63) aufweist, welcher senkrecht zu dem ersten Federstab (6) in Fahrzeugsitzbreitenrichtung (B) oder Fahrzeugsitzlängsrichtung (L) angeordnet ist.

2. Fahrzeugsitz (1) nach Anspruch 1,
**dadurch gekennzeichnet, dass**
die zweite Dämpfungseinrichtung (62) in einer Fahrzeugsitzhöhenrichtung (H) gesehen unterhalb der ersten Dämpfungseinrichtung (27) und unterhalb der Federeinrichtung (2) angeordnet ist.

3. Fahrzeugsitz (1) nach Anspruch 1 oder 2,
**dadurch gekennzeichnet, dass**
die zweite Dämpfungseinrichtung (62) einen dritten Dämpfer (64) aufweist, welcher parallel zu dem zweiten Dämpfer (63) angeordnet ist und der zweite Dämpfer (63) und der dritte Dämpfer (64) in einer gemeinsamen Ebene angeordnet sind, welche parallel ist zu einer Ebene gebildet aus der Fahrzeugsitzlängsrichtung (L) und der Fahrzeugsitzbreitenrichtung (B).

4. Fahrzeugsitz (1) nach einem der Ansprüche 1-3,
**dadurch gekennzeichnet, dass**
die Sitzfederung einen zweiten in radialer Richtung verformbaren Federstab (14) aufweist.

5. Fahrzeugsitz (1) nach einem der Ansprüche 1-4,
**dadurch gekennzeichnet, dass**
das Verbindungsteil (8) eine wippenähnliche Struktur (22) aufweist, wobei an einem ersten Ende der wippenähnlichen Struktur (22) ein erstes Wippenelement (19) und an einem zweiten Ende der wippenähnlichen Struktur (23) ein zweites Wippenelement (20) angeordnet sind, wobei das erste Wippenelement (19) und das zweite Wippenelement (20) mit dem Oberteil (3) in Wirkkontakt stehen.

6. Fahrzeugsitz (1) nach einem der Ansprüche 1-5,
**dadurch gekennzeichnet, dass**
die erste Dämpfungseinrichtung (27) zusätzlich einen vierten Dämpfer (65) und bevorzugt zusätzlich einen fünften Dämpfer (66) und einen sechsten Dämpfer (67) aufweist.

7. Fahrzeugsitz (1) nach einem der Ansprüche 1-6,
**dadurch gekennzeichnet, dass**
ein erster Abstand (17) der fünften Schwenkachse (68) zu der zweiten Schwenkachse (45) größer ist als ein zweiter Abstand (18) der dritten Schwenkachse (46) zu der vierten Schwenkachse (47).

8. Fahrzeugsitz (1) nach einem der Ansprüche 1-7,
**dadurch gekennzeichnet, dass**
eine Länge (72) des Oberteils (3) in Fahrzeugsitzlängsrichtung (L) kürzer ist als eine Länge (73) des Unterteils (4) in Fahrzeugsitzlängsrichtung (L), wobei der erste Dämpfer (30) mit dem ersten Ende (31) an einer Innenseite (77) eines Unterteilabschnitts (75), welcher senkrecht zu dem Unterteil (4) steht und damit verbunden ist, und das zweite Hebelelement (29) an einer Außenseite (76) eines Oberteilabschnitts (74), welcher senkrecht zu dem Oberteil (3) steht, verbunden ist.

## Claims

1. Vehicle seat (1) with a suspension device (2) for suspending pivoting movements and with a first damping device (27) for damping the pivoting movements of an upper part (3) of the vehicle seat (1) relative to a lower part (4) of the vehicle seat (1) about a pivot axis (5) running in a vehicle seat longitudinal direction (L) or vehicle seat width direction (B) and with a second damping device (62) for damping a translational movement of the vehicle seat (1),
**characterised in that**
the suspension device (2) has a first spring rod (6) which can be elastically deformed in a transverse direction and in a vehicle seat longitudinal direction (L) or vehicle seat width direction (B) and a connecting part (8) pivotable about the pivot axis (5) and which connects the first spring rod (6) and the pivot axis (5) in order to deform the first spring rod (6) during a pivoting of the upper part (3),
wherein the first damping device (27) comprises a first damper (30) having a first end (31) and a second end (32), wherein the first end (31) is pivotally connected to the lower part (4) by means of a first pivot axis (44), and the second end (32) is pivotally connected by a fifth pivot axis (68) with a first lever element (28), wherein the first lever element (28) is pivotally connected by means of a second pivot axis (45) with the lower part (4) and a second lever element (29) is provided, which is connected pivotably by means of a third pivot axis (46) to the first lever element (28) and pivotably by means of a fourth pivot axis (47) to the upper part (3),
and wherein the second damping device (62) comprises a second damper (63) arranged perpendicular to the first spring rod (6) in the vehicle seat width direction (B) or vehicle seat longitudinal direction (L).

2. Vehicle seat (1) according to claim 1,
**characterised in that**
the second damping device (62) is arranged below the first damping device (27) and below the suspension device (2) as seen in a vehicle seat height direction (H).

3. Vehicle seat (1) according to either claim 1 or 2,
**characterised in that**
the second damper (62) has a third damper (64) arranged in parallel to the second damper (63) and the second damper (63) and the third damper (64) are arranged in a common plane which is parallel to a plane formed from the vehicle seat longitudinal direction (L) and the vehicle seat width direction (B).

4. Vehicle seat (1) according to any of claims 1-3,
**characterised in that**
the seat suspension has a second radially deformable spring rod (14).

5. Vehicle seat (1) according to any of claims 1-4,
**characterised in that**
the connecting part (8) has a rocker-like structure (22), a first rocker element (19) being arranged at a first end of the rocker-like structure (22) and a second rocker element (20) being arranged at a second end of the rocker-like structure (23), wherein the first rocker element (19) and the second rocker element (20) are in operative contact with the upper part (3).

6. Vehicle seat (1) according to any of claims 1-5,
**characterised in that**
the first damping device (27) additionally has a fourth damper (65) and preferably additionally a fifth damper (66) and a sixth damper (67).

7. Vehicle seat (1) according to any of claims 1-6,
**characterised in that**
a first distance (17) of the fifth pivot axis (68) to the second pivot axis (45) is greater than a second distance (18) of the third pivot axis (46) to the fourth pivot axis (47).

8. Vehicle seat (1) according to any of claims 1-7,
**characterised in that**
a length (72) of the upper part (3) in the vehicle seat longitudinal direction (L) is shorter than a length (73) of the lower part (4) in the vehicle seat longitudinal direction (L), wherein the first damper (30) is connected at the first end (31) to an inner side (77) of a lower part portion (75) which is perpendicular to the lower part (4) and the second lever element (29) is connected to an outer side (76) of an upper part portion (74) which perpendicular to the upper part (3).

## Revendications

1. Siège de véhicule (1) avec un dispositif à ressort (2) pour l'amortissement par ressort de mouvements de pivotement et avec un premier dispositif d'amortissement (27) pour l'amortissement des mouvements de pivotement d'une partie supérieure (3) du siège de véhicule (1) vis-à-vis d'une partie inférieure (4) du siège de véhicule (1) autour d'un axe de pivotement (5) disposé s'étendant dans une direction longitudinale (L) du siège de véhicule ou dans une direction de la largeur (B) du siège de véhicule et avec un second dispositif d'amortissement (62) pour l'amortissement d'un mouvement de translation du siège de véhicule (1),
**caractérisé par le fait que**
le dispositif à ressort (2) présente une première tige à ressort (6) élastiquement déformable en direction transversale et s'étendant dans une direction longitudinale (L) du siège de véhicule ou dans une direction de la largeur (B) du siège de véhicule, et une partie de liaison (3) qui est capable de pivoter autour de l'axe de pivotement (5) et laquelle relie la première tige à ressort (6) et l'axe de pivotement (5) pour déformer la première tige à ressort (6) lors d'un pivotement de la partie supérieure (3),
le premier dispositif d'amortissement (27) comportant un premier amortisseur (30) avec une première extrémité (31) et une seconde extrémité (32), la première extrémité (31) étant reliée de façon pivotante au moyen d'un premier axe de pivotement (44) avec la partie inférieure (4) et la seconde extrémité (32) étant reliée de façon pivotante au moyen d'un cinquième axe de pivotement (68) avec un premier élément levier (28), le premier élément levier (28) étant relié de façon pivotante au moyen d'un deuxième axe de pivotement (45) avec la partie inférieure (4), et un deuxième élément levier (29) étant prévu, lequel est relié de façon pivotante au moyen d'un troisième axe de pivotement (46) avec le premier élément levier (28) et étant relié de façon pivotante au moyen d'un quatrième axe de pivotement (47) avec la partie supérieure (3),
et le second dispositif d'amortissement (62) présentant un deuxième amortisseur (63), lequel est disposé perpendiculairement à la première tige à ressort (6) dans la direction de la largeur (B) du siège de véhicule ou dans la direction longitudinale (L) du siège de véhicule.

2. Siège de véhicule (1) selon la revendication 1, **caractérisé par le fait que** le second dispositif d'amortissement (62) est disposé, vu dans une direction de la hauteur (H) du siège du véhicule, au-dessous du premier dispositif d'amortissement (27) et au-dessous du dispositif à ressort (2).

3. Siège de véhicule (1) selon l'une des revendications 1 ou 2,
**caractérisé par le fait que**
le second dispositif d'amortissement (62) présente un troisième amortisseur (64), lequel est disposé parallèlement au deuxième amortisseur (63) et le deuxième amortisseur (63) et le troisième amortisseur (64) sont disposés dans un plan commun, lequel est parallèle à un plan formé à partir de la direction longitudinale (L) du siège de véhicule et de la direction de la largeur (B) du siège de véhicule.

4. Siège de véhicule (1) selon l'une des revendications 1 à 3,
**caractérisé par le fait que**
la suspension de siège présente une deuxième tige à ressort (14) déformable en direction radiale.

5. Siège de véhicule (1) selon l'une des revendications 1 à 4,
**caractérisé par le fait que**
la partie de liaison (8) présente une structure (21) de type à bascule, où sur une première extrémité de la structure de type à bascule (22), est disposé un premier élément basculant (19) et, sur une seconde extrémité (23) de la structure de type à bascule (22), est disposé un second élément basculant (20), le premier élément basculant (19) et le second élément basculant (20) étant en contact fonctionnel avec la partie supérieure (3).

6. Siège de véhicule (1) selon l'une des revendications 1 à 5,
**caractérisé par le fait que**
le premier dispositif d'amortissement (27) présente en outre un quatrième amortisseur (65) et de préférence en outre un cinquième amortisseur (66) et un sixième amortisseur (67).

7. Siège de véhicule (1) selon l'une des revendications 1 à 6,
**caractérisé par le fait qu'**
une première distance (17) du cinquième axe de pivotement (68) au deuxième axe de pivotement (45) est plus grande qu'une seconde distance (18) du troisième axe de pivotement (46) au quatrième axe de pivotement (47).

8. Siège de véhicule (1) selon l'une des revendications 1 à 7,
**caractérisé par le fait qu'**
une longueur (72) de la partie supérieure (3) dans la direction longitudinale (L) du siège de véhicule est plus courte qu'une longueur (73) de la partie inférieure (4) dans la direction longitudinale (L) du siège du véhicule, le premier amortisseur (30) étant relié avec la première extrémité (31) sur un côté interne (77) d'une section de partie inférieure (75), laquelle se trouve perpendiculaire à la partie inférieure (4) et est reliée avec elle, et le second élément levier (29) est relié à un côté externe (76) d'une section de partie supérieure (74), laquelle se trouve perpendiculaire à la partie supérieure (3).
